# EUROPEAN PATENT SPECIFICATION

(11) **EP 0 556 682 B1**
(45) Date of publication and mention of the grant of the patent: **03.12.1997**
(21) Application number: 93101933.5
(22) Date of filing: 08.02.1993
(51) Int. Cl.: G01B 7/28, G01B 7/02

(54) **Electronic capacitive sensor bar device**
Elektronische kapazitive Sensorstangeneinrichtung
Capteur capacitif électronique en forme de barre

(30) Priority: 10.02.1992 IT PI920003; 19.02.1992 IT PI920006
(43) Date of publication of application: 25.08.1993
(73) Proprietor: SYEL di FRANCHI A.- MARTOLINI A. & C. s.n.c., I-56025 Pontedera - Pisa (IT)
(72) Inventor: Franchi, Adriano, I-56025 Pontedera - Pisa (IT); Martolini, Aldo, I-57127 Livorno (IT)
(74) Representative: Siniscalco, Fabio

(56) References cited:
- EP-A- 0 004 757
- EP-A- 0 425 823
- WO-A-88/01747
- WO-A-92/08947
- PATENT ABSTRACTS OF JAPAN vol. 006, no. 208 (C-130) 20 October 1982 & JP-A-57 113 864 ( TORINITEI KOGYO KK ) 15 July 1982
- DATABASE WPIL Week 9131, Derwent Publications Ltd., London, GB; AN 91-227265 & JP-A-3 146 788 ( YOKOGAWA DENKI KK ) 21 June 1991

## Description

The present invention concerns an electronic capacitive sensor bar device for detecting the shape and the proximity in general of objects.

The problem of measuring surfaces and detecting the shape of objects is often solved by using proximity sensors.

It is well known that these sensors, if compared to mechanical transducers, offer many advantages such as high reliability, miniaturization, a high switching speed, a high precision and no need for maintainance.

Some of these characteristics are obviously more peculiar to some kinds of sensors.

In particular, for instance, the switching speed is much higher in photoelectric and inductive sensors than in capacitive and ultrasonic ones; the maximum intervention distance is definitely higher in the ultrasonic sensors as compared to the other ones; the inductive sensors have the best resolution, but, as a handicap, they are sensitive, as it is known, only to metals.

These and other considerations let us easily understand that each class of proximity sensors has a privileged and optimum application field.

Referring to capacitive sensors we can see, for instance, that in the european patent EP-A-0425823, these ones are advantageously used in substitution of optics for mapping or imaging the surface of objects, overcoming the difficulties encountered by optic apparatuses in some situations, where the roughness of the surface interfere with the light used, or where plastic surfaces or dirty metal surfaces are to be inspected. The capacitive sensor configuration, provided on a PCB, includes sensors placed side by side having a plate in common.

Again referring to capacitive sensors, in the PCT patent WO88/01747 is shown an application in the field of robotics, where a capacitance sensor array is used for tactile sensing of properties of an object by connecting each capacitor plate of the sensor array and the object to be detected to oscillating circuits, so that the oscillation frequency of each of the oscillating circuits is a function of the capacitance between each capacitor and the object.

A further example of capacitive systems applications is shown in the european patent 0004757 where a plurality of probes adapted to be positioned proximate an object are employed in conjunction with processing means to evaluate the distance between each probe and the object.

However, electromechanical transducers are still being used in many industrial applications, especially when the economic factor and the insensitivity to dust, water, oil and other disturbance sources play a leading role. Applications concern, for example, the wood or leather fields where these sensors are used together with either manufacturing machines or machines for measuring surfaces or detecting the shape of objects.

In particular, these machines employ batteries of on-line sensors, obliquely placed as to the feed direction of the objects. The sensors are placed at a working distance that enables them to detect the shape of the object with a resolution sufficient to perform the prefixed function. However, such resolution has a limit due to the overall dimensions of the transducer itself.

Another handicap connected to the use of electromechanical transducers in the above mentioned configuration is due to the fact that, in order to ensure the necessary response uniformity of all the sensors, each one must be separately calibrated on the spot; in this regard, it must be said that in order to enable a good calibration, the supporting means of the transducers themselves have to be constructed with high accuracy and possess specific characteristics. This, however, does not avoid the need for of periodic controls of the calibration nor does it improve the hysteresis associated to the transducer, which is known to be a great limitation as to the thickness of the object to be detected.

Moreover, the on-line positioning of the transducers involves specific burdens and complications as to the connection of the sensors' battery to the outer processing and control units of the machine on which they are installed.

The purpose of the present invention is to propose a sensor bar device to be used in those fields where the electromechanical transducers are being used, in order to replace them and solve the above mentioned problems; such a device could also be used in those fields where it is necessary to detect different objects avoiding any contact with them, with a good insensitivity to environmental factors, high reliability and at low costs.

The above mentioned purposes are achieved according to claim 1.

The proximity sensors of the capacitive family comprising two flat plates placed side by side and turned towards the object to be detected, are contained in a card for printed electric circuits; the plates of said sensors being made up by portions of the metal surfaces of said card.

Thanks to the fact that the sensors are directly inserted in cards for printed circuits it can be obtained a resulting device framework such that constant operation features of the sensors are guaranteed, as well as a simplificatin of the industrial manufacturing of the device.

The structure of each capacitive sensor allows a high operation stability of the sensors themselves, because the effects of undesired capacitive couplings between the respective plates are almost completely avoided; these effects would obviously be of a variable intensity according to the changes in the environmental conditions in proximity to the sensors.

The sensitivity of the whole device to the different materials or to the distance of the objects to be detected can be easily changed by modifying a single regulating element that sets a single threshold for all the signals produced by said first electronic circuits.

The device structure together with the easy sensitivity calibration and the presence of connectors, results in a modular component configuration; it is therefore easy to produce batteries of sensors, of a length suitable to the different shapes of the objects to be detected.

The detailed characteristics and advantages of the invention are shown in the following example of a practical embodiment of the same, with reference to the attached drawings, in which:
- figure 1 is a partial perspective section of a device according to the invention;
- figure 2 is a further perspective view of a device according to figure 1;
- figure 3 shows a diagram of the global electric circuit of a device corresponding to figures 1 and 2;
- figure 4 represents a schematic view, in part section, of one of the sensors used in the device according to the invention;
- figure 5 represents an alternative configuration of the sensor of the previous figure;
- figure 6 represents the equivalent electric diagram of the sensor of figures 4 and 5;
- figure 7 represents the global electric diagram relative to one of the sensors of the device according to the invention, when used as a proximity sensor;
- figure 8 represents the electric diagram relative to one of the sensors of the device according to the invention when used as a transducer for measuring the distance.

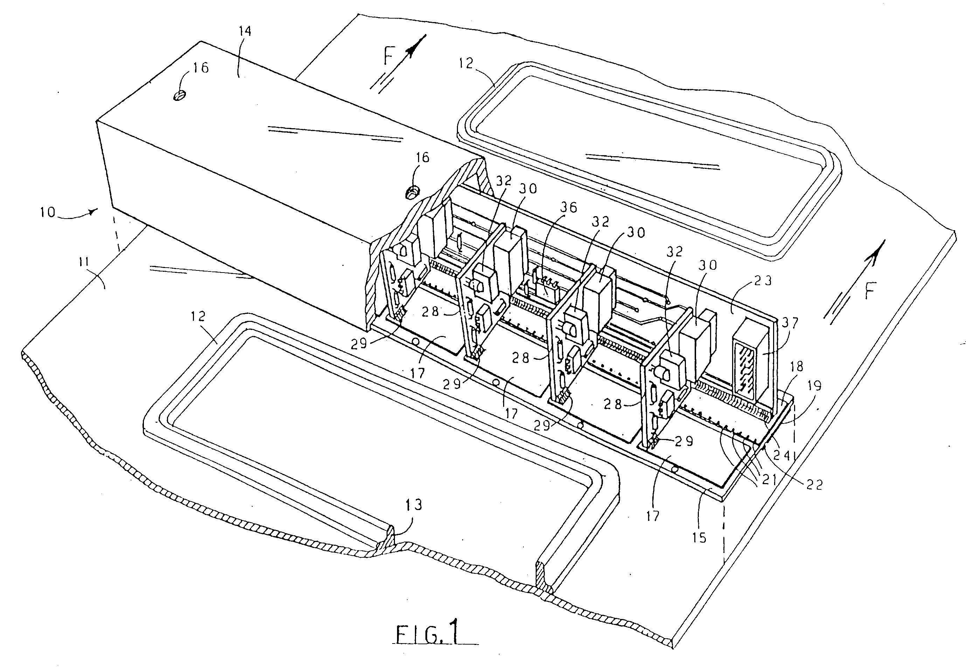

Referring to fig.1, "10" is a sensor bar device according to the invention, represented with a solid line and placed above the feed level, 11, of processed objects; in this case the latter are wooden frames, 12, with a sectional profile 13.

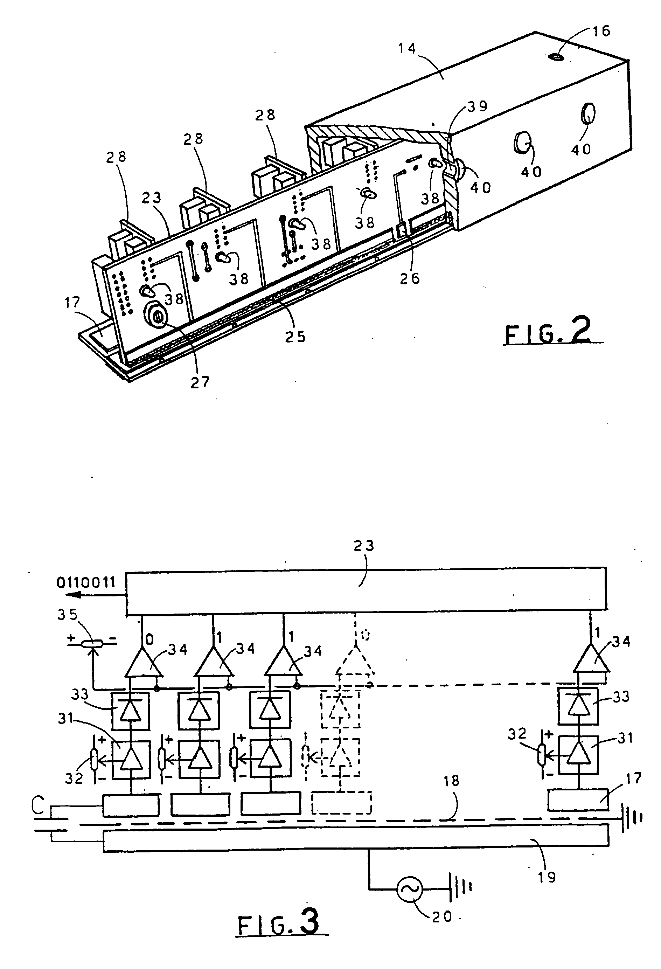

The device 10 is within a prismatic container 14 which acts as bearing and protection from outer agents. As we can see in figures 1 and 2, the section of the container 14 has a reversed "U"-shape; the plate for printed circuits, 15, is screwed onto the open side of the section: it is the seat of the capacitive sensors that will be later illustrated in detail.

On the opposite side, we can see screwed holes, 16, useful to connect the mentioned device to the framework of the machine or the equipment to which it belongs.

On the card, 15, we can see the portions of the metal layer, 17 and 18, located on the surface located in the inner part of the device; a further metal strip, 19, is located on the outer surface of the card 15: the figure shows only its profile thickness.

Each metal portion 17 virtually represents one of the plates of each capacitive sensor located in the device 10; the capacitive coupling that is influenced by the presence or absence of objects located near the device is the coupling occurring between each metal portion 17 and the continuous strip 19, placed on the bottom face of the card 15, which represents the other plate of the above mentioned sensors.

Figure 3 schematically indicates, as "C", only one of such capacitive couplings; the other ones have been omitted to simplify the drawing.

As we can see, in the block diagram of the figure, the element 18 indicates an element acting as a division and a screen between the circuit including the signal generator 20 and the receiver circuits associated to each plate 17. In fact, the portion of the metal layer 18 has the above mentioned screen function; referring to figure 1, the layer physically extends not only along the upper face of the card 15, but also within the central part of the card corresponding to the metal holes 21 - and further in the thin, continuous longitudinal strip 22, located in the middle of the bottom face of the card 15, near the continuous plate 19. The resulting structure of the element 18 borders the plate 19 on the top and lateral side, and virtually prevents any undesired capacitive coupling that might occur between the continuous metal strip 19 and the metal portions 17.

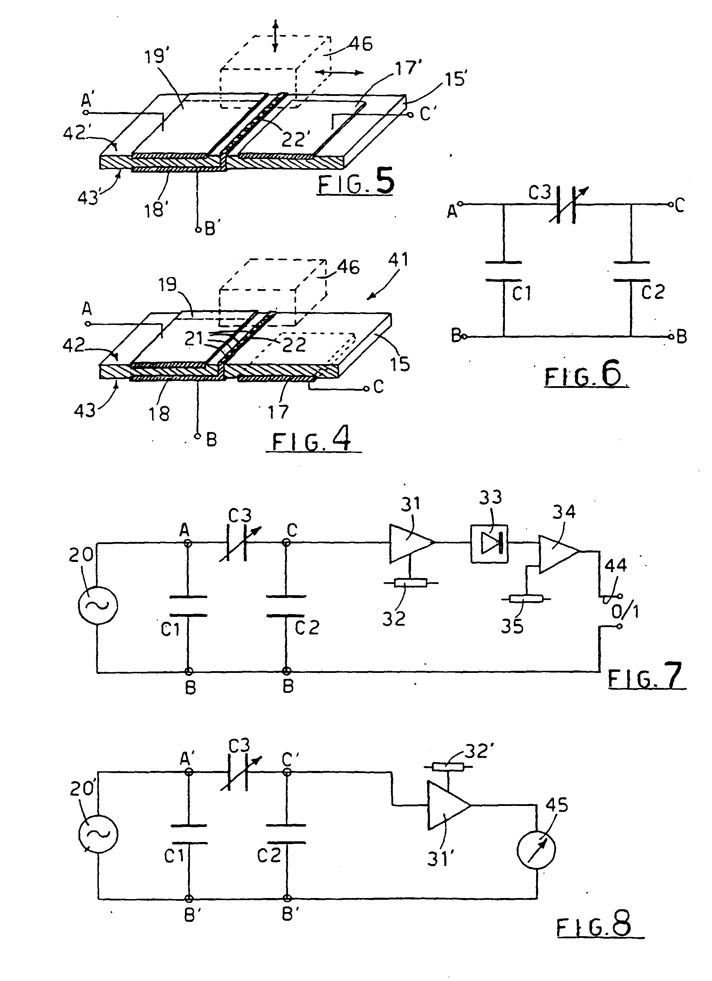

Figure 4 shows, in greater detail, the shape of each capacitive sensor located on the card 15; in particular, we can see that the element 18 encloses at least two sides of the active plate 19 of the sensor, generically indicated as 41; this minimizes the capacities between the two active plates that are not directly related to the presence of objects in the area facing the side 42 of the card 15.

In the equivalent circuit of figure 6, C3 is the varying capacity related to the above mentioned presence of objects 46 near each sensor; C1 and C2 are the almost constant capacities between, respectively, plates 17 and 19 and the screen element 18; tha value of C1 being positively higher than C2, in this case.

Figure 5 shows a different structure of each single sensor 41 of the card 15; this structure is anyway almost equivalent to one in figure 4. In this case, one of the active plates, precisely plate 17, is located on the side of the card 15 opposite to the side where the main part of the screen plate 18 is located.

The equivalent diagram of this configuration is again the one of figure 6, but the capacity value C3, as to the configuration of figure 5, is higher than the value of the configuration of figure 4 - assuming distance, size and type of material of the element 46 not to change.

Therefore, the sensor of this second configuration is more sensitive to the presence of objects to be detected in its proximity. However, it has to be pointed out that, at the same time, it is generally more sensitive, and therefore more vulnerable in some particularly onerous environments where it might be placed. This means that undesired and fortuitous capacitive couplings between the two active plates 17 and 19 could occur when they are both placed in such environments, as illustrated in the configuration of figure 5.

The location of the plates 17 and 19 as to the supporting card 15, as shown in figure 4, is therefore more suitable whenever a high measuring precision is not required but a good insensitivity to disturbing factors is advisable; for example, in wood processing or in other equally dangerous fields from the environmental point of view, where only the presence or absence of elements or objects placed at a given distance from the sensor have to be detected.

In such cases the sensor is connected to a sensing circuit such as that of figure 7, where the output electric signal is logic.

As we can see, in this diagram an alternate current generator 20 is connected to the A and B terminals of the sensor; in other words, it is connected to its active plate 19 and the screen plate 18.

The output terminals C and B are connected to an electronic circuit including an amplifier 31 whose gain can be adjusted through the regulation element 32, a rectifier circuit 33 of the signal produced by such amplifier circuit 31, a comparator circuit 34 at the input of which we can see both the signal produced by the above mentioned rectifier circuit 33 and a signal derived from a potentiometer 35.

The operation of each sensor in the configuration of figure 4 is easily deducible from the above description.

Once the amplitude and the frequency of the signal produced by the generator 20 have been established, the amplitude of the input signal of the amplifier 31 is a function of the capacity value C3 which, as we can see, is located in series to such signal and, as previously illustrated, depends almost in full upon the capacitive coupling between the two active plates 17 and 19, generated by the presence of objects 46 of various materials in the area facing such plates.

The minimum activation distance of the sensor can be set by regulating both the amplifier gain 31 and the comparison threshold with the potentiometer 35; the final signal produced by this circuit can have only two values, which can be expressed by two logic levels, 0/1, corresponding to the voltage level between the output terminal 44 and the reference terminal B. Of these logic levels, the lower one is likely, but not necessarily, associated to the absence of objects within the minimum distance field as stated above, while the higher one is associated to the presence of objects placed at a lower distance than the minimum one.

Still referring to figures 1 and 2, 23 is a second card for printed circuits, perpendicular to the card 15, and it is mechanically and electrically connected through the welds 24 and 25 to the continuous metal strip 18 which, besides its above mentioned screen function, represents, as already stated, the common reference pole for the generator electric circuit and for the receiver electric circuits associated to each sensor. The generator 20, consisting basically in an oscillator, is located on the card 23 and is connected to the continuous plate 19 through the connection track 26 which crosses the card 15 in an area where, as shown in figure 2, no weld, 25, is present.

The potentiometer 27, still located on the card 23, allows adjusting the oscillation frequency of the generator circuit 20.

Finally, every single supporting card 28 of each circuit for the detecting of the signals, capacitively collected on each plate 17, is placed orthogonally both to the card 23 and to the card 15; these circuits have already been described in figure 7.

The cards 28 are mechanically anchored to the metal plates 17 through the welds 29, which also act as electric connectors; they are connected to the card 23 through the connectors 30.

Each recording circuit mounted on the supporting cards 28 includes the amplifiers 31, the amplifying gain of which can be adjusted through the regulation potentiometers 32; it also includes the rectifier circuits 33 of the amplified signals produced by the amplifiers 31 and the comparator circuits 34, through which the continuous signals produced bv the rectifier circuits 33 are compared with a preestablished threshold level that can be set bv the regulating element 35.

The logic signals produced by the above mentioned comparator circuits 34 are sent, through the connection units 30, to the card 23, where appropriate digital electronic circuits 36 serially transmit them to the processing and control units located ouside the device 10 and connected to the latter through the connector 37.

Finally, in figure 2 we can see LEDs, 38, anchored to the card 23 at the level of the supporting cards 28; the light produced by each LED can be seen from outside the device 14 thanks to the presence, in the latter container, of visualization slots 39, protected by transparent plastic plugs 40.

The device globally operates as follows.

A calibration phase should precede the actual use of the device. During the calibration phase, both the sensitivity and the hysteresis degree of the device are defined as related to the specific application field.

Thanks to the peculiar structure of its capacitive sensors, the device can be calibrated in order to record the presence of nearby objects made of different materials, either ferrous or not, and located at varying distances.

The above calibration is made by acting both on the potentiometer 27, which defines the oscillation frequency of the signal generator 20 - the most suitable one for the material to be sensed - and on the potentiometer 35 which defines the sensitivity level that can likely be associated to the maximum recordable distance.

As to the calibration range, it has to be noticed that the presence of the potentiometers 32 for adjusting the amplification factor of each single amplifier is generally useful to standardize the response sensitivity of the various sensors; at the same time, it allows setting a different sensitivity for each sensor thus granting a high flexibility as to the possible applications.

In the example to which figure 1 refers, all sensors are calibrated so as to yield a uniform sensitivity degree.

In this case, the material to be sensed is wood and the maximum intervention distance is that between the card 15 and the horizontal wing of the section profile 13 of the wooden article, as shown in figure 1.

When, owing to the feeding towards F of the bearing element 11 of the frames 12, the latter enter the area below the device 10, the capacitive coupling between the continuous metal strip 19 and a given number of plates 17 reaches values that enable an electric signal transmission sufficient to gate the output level of the switches located on the supporting cards 28 connected to each of the above mentioned plates 17.

The information relative to each sensor 41 located on the card 15 is serially transmitted through the serial and transmission unit 36 to the processing and control units placed outside the device 10, to which they are connected through the connector 37.

In this specific case, the above mentioned information is supplemented with the feed speed of the plate 11; such speed can be measured by an appropriate transducer of a well-known type, not shown in figure. The combination of the two kinds of information allows to detect the shape 12 of the item and, if necessary, computing its surface, with an approximation that depends upon the reading precision of the speed transducer as well as upon the size of every single plate 17 of the sensors 41.

Depending upon the applications, it is therefore possible to use devices according to the invention including a smaller or greater number of sensors for the same surface area; alternatively, it is possible to use more devices firmly interconnected.

The device according to the invention can also be used, as previously stated, as a transducer for measuring the distance of objects of different materials. The configuration of each sensor shown in figure 5 is more suitable to this application, because of its higher sensitivity; here, both active plates 17' and 19' face the object 46, whose distance has to be measured.

The electronic circuit associated to each sensor is, in this case, the one schematically illustrated in figure 8, where the generator 20' is still connected to the active plate 19' and the screen plate 18'; the electric signal capacitively sent to the frame 17' is, however, simply amplified through the amplifier 31', and then measured by the measuring device 45.

The amplifying factor of the amplifier 31' can be set by the potentiometer 32', during a preliminary calibration phase of the sensor; this phase is necessary because the capacitive coupling between the two active plates of the sensor depends on the size and the shape of the element 46 as well as on the material - the distance being equal.

Obviously, it is possible to introduce further changes both in the shape and in the location of the different parts of the detection device.

In particular, it is possible to change the shape of the single plates, so as to consider circular surfaces instead of rectangular ones; it is also possible to change the screen plate configuration, which might enclose one or both of the active plates on three sides; different circuit diagrams can be also developed for the individual sensors, according to the specific application.

The supportings cards 28 of the detecting circuits connected to each sensor, 41, could be placed in a parallel, rather than in a perpendicular, configuration with respect to card 23.

## Claims

1. Electronic capacitive Sensor bar device (10) for detecting the shape and the proximity in general of objects, of the type provided on a card (15,15') for printed electric circuits having metal surfaces on a dielectric substrate and comprising sensors (41) of the capacitive family placed side by side in a single structure and having a plate in common (19,19'), first electronic circuits (31,33,34) producing electric signals associated to the presence of objects facing said sensors (41) in proximity of said structure, second electronic circuits (36) transmitting said electric signals to processing and control units located outside said device,
characterized in that
said common plate (19,19') consists in a single continuous strip obtained from a metal layer of said card (15,15') located laterally and longitudinally on the face (42,42') of said card turned towards the outside of said device (10) and the other plates (17,17') of said sensors (41) consist in contiguous metal layer portions of said card, (15,15'), said device (10) including a further metal layer strip (18,18') located between said common plate (19,19') and said contiguous plates (17,17') acting as a screen and a stabilizer against any stray capacitance occurring between said common plate (19,19') and said contiguous plates (17, 17'), said further metal strip (18,18') being shaped in such a way to surround at least two sides of said common plate (19,19').

2. Sensor bar device according to claim 1, wherein said contiguous plates (17) are placed on the face (43) of said card (15) turned towards the inside of said device and on the opposite side to the one where said continuous strip (19) is located.

3. Sensor bar device according to claim 1 wherein said contiguous plates (17') are placed on the same face (42') but on the opposite side to the one where said single continuous strip (19') is located.

4. Sensor bar device according to any claim from 1 to 3, wherein said further metal strip (18,18') substantially consists in a continuous metal layer portion placed on the face (43,43') of said card (15,15') turned towards the inside of said device on the same side where said common plate (19,19') is placed, said metal strip (18,18') being connected through metallized holes (21) with a thin continuous metal strip (22,22') placed on the opposite face (42,42') between said common plate (19,19') and said contiguous plates (17,17').

5. Sensor bar device according to any claim from 1 to 4, said device comprising one of said first electronic circuits (31,33,34) for each one of said sensors (41), each of said first electronic circtuis (31,33,34) being located on its own physically separated supporting means (28) electrically and mechanically connected to said card (15) near the capacitive sensor to which said supporting means (28) is associated, said second electronic circuits (36) being located on a further card (23) for printed electric circuits, said further card (23) being electrically and mechanically connected both to said card (15) and to every single supporting means (28) of each first electronic circuit, the resulting structure of said device (10) corresponding to a prismatic volume closed on three sides by a protective container (14) while its fourth side consists in said card (15) containing said plates (17, 19) of said capacitive sensors (41).

6. Sensor bar device according to any claim from 1 to 5, said device comprising units (27,32,35) for adjusting and calibrating the sensors (41) sensitivity to the different materials and to the distance of the objects to be sensed, said regulation units allowing the simultaneous regulation (27,35) of the sensitivity of all said sensors as well as a separate regulation (32) for each one of them.

7. Sensor bar device according to any claim from 1 to 6 wherein said electric signals produced by said first electronic circuits (31, 33, 34) are of digital form, one of the levels of said digital signal being associated to the presence of objects in proximity of said sensors (41), the other one of said levels being associated to the absence of objects in proximity of said sensors, said digital signals being serially transmitted by said second electronic circuits (36) to processing and control units located outside said device (10).

8. Sensor bar device according to any claim from 2 to 7 wherein said common plate (19) is connected to an alternating current electric generator (20), the other terminal of said generator (20) being connected to said screening and stabilization metal strip (18), said first electronic circuits comprising amplifying circuits (31) of the electric signals capacitively collected on said contiguous plates (17), circuits (33) generating electric signals whose mean value is proportional to the amplitude of the signal produced by said amplifying circuits (31), circuits (34) comparing said electric signal produced by said signal generating circuits (33) with a reference signal set through calibration means (35).

9. Sensor bar device according to any claim from 3 to 7 wherein said common plate (19') is connected to an alternating current electric generator (20'), the other terminal of said generator being connected to said screen and stabilizer (18'), said contiguous plates (17') being connected to electronic circuits comprising amplifiers (31') whose gain can be regulated through regulation means (32'), measuring instruments (45) being connected between the output terminal of said amplifiers (31') and said screen and stabilizer (18') in order to obtain a measure of the distance of objects from said sensors (41).

10. Sensor bar device according to any previous claim, said device comprising luminous indicators (38) associated with each capacitive sensor (41), said indicators (38) being controlled in such a way that they are switched on when the electric signals resulting from said first electronic circuits (31,33,34) assume the logic level associated to the presence of objects near said each capacitive sensor (41) at a distance at which they can be sensed.

11. Sensor bar device according to any claim from 1 to 10, said device comprising equipments (37) for a rapid connection to at least another one of said devices in such a way that it results in a new single structure of a length adequate to the size of the objects whose shape and presence have to be detected.

12. Use of the sensor bar device according to any claim from 7 to 11 on lapping machines of wooden products and/or on painting machines of wooden, plastics or leather products, the digital signals produced by said device being transmitted to processing and control units together with other signals associated to the feed speed of said products in proximity of said sensors, in order to calculate the area of said products surface.

## Patentansprüche

1. Elektronische kapazitive Sensorstangeneinrichtung für die Abnahme der Form und der Nähe im allgemeinen von Objekten des auf einer Karte vorgesehenen Typs (15, 15') für gedruckte elektrische Schaltungen, die eine metallene Oberfläche auf einem dielektrischen Substrat haben und kapazitive Sensoren (41) enthalten, die aneinander angrenzend in einem einzigen strukturellen Komplex angeordnet sind und eine gemeinsame Armatur haben (19, 19'), erste elektronische Schaltungen (31, 33, 34), die elektrische Signale produzieren können die verknüpft sind mit Objekten, die den genannten Sensoren (41) gegenüberliegend sind, in der Nähe der genannten Struktur; zweite elektronische Schaltungen (36), die genannte elektrische Signale den außenliegenden Ausarbeitungs- und Kontrolleinheiten des genannten Geräts übermitteln, **dadurch gekennzeichnet, daß** die genannte gemeinsame Armatur (19, 19') aus einem einzigen durchgehenden Streifen besteht, der durch einer Metallschicht der genannten Karte (15, 15') erhalten wird, seitlich und längs auf der Vorderseite (42, 42') der genannten Karte gelegen, die nach der Außenseite der genannten Einrchtung (10) gerichtet ist; die anderen Armaturen (17, 117') der genannten Sensoren (41) bestehen in Teilen aus angrenzendem Metallstreifen der genannten Karte (15, 15'), die genannte Einrichtung enthält einen weiteren Streifen der Metallschicht (18, 18'), zwischen den genannten gemeinsamen Armaturen (19, 19') und den genannten angrenzenden Armaturen (17. 17'), mit der Funktion eines Schirms und zur Stabilisierung gegen eventuelle Abweichungskapazität, die zwischen der genannten gemeinsamen Armatur ( 19, 19') und den angrenzenden Armaturen (17, 17') entstehen kann: der genannte weitere Metallstreifen (18, 18') ist so gestaltet daß er wenigstens zwei Seiten der genannten gemeinsamen Armatur (19, 19') umfassen kann.

2. Sensorstangeneinrichtung nach Anspruch 1, in dem die genannten angrenzenden Armaturen (17) auf der Seite (43) der genannten Karte (15) gelegen sind, die nach der Innenseite der genannten Einrichtung gerichtet ist, und auf der gegenüberliegenden Seite, wo sich der genannte durchgehende Streifen befindet (19).

3. Sensorstangeneinrichtung nach Anspruch 1. in dem die genannten angrenzenden Armaturen (17') auf derselben Seite (42') gelegen sind, aber gegenüberliegend der Seite, wo genannter durchgehender Streifen (19') sitzt.

4. Sensorstangeneinrichtung nach einem der Ansprüche 1 bis 3, wo genannter weiterer Metallstreifen (18, 18') hauptsächlich aus einem durchgehenden Teil Metallschicht besteht, angelegt auf der Seite (43, 43') der genannten Karte (15, 15'), gegen die Innenseite der genannten Einrichtung gerichtet, auf derselben Seite wo sich genannte gemeinsame Armatur (19, 19') befindet; genannter Metallstreifen (18, 18') ist durch metallisierte Löcher (21) mit einem dünnen durchgehenden Metallstreifen (22, 22') verbunden, der auf der gegenüberliegenden Seite (42, 42') zwischen genannter durchgehender Armatur (19, 19') und genannten angrenzenden Armaturen (17, 17') gelegen ist.

5. Sensorstangeneinrichtung nach einem der Ansprüche 1 bis 4, genannte Einrichtung enthält einen der genannten ersten elektronischen Schaltungen (31, 33, 34) für jeden der genannten Sensoren (41), jeder der genannten ersten elektronischen Schaltungen (31, 33, 34) ist von einer eigenen Halterung gehalten (28), physikalisch unterschiedlich von den anderen, elektrisch und mechanisch verbunden mit genannter Karte (15, 15'), die verbunden ist mit dem kapazitiven Sensor, mit dem genannte Halterung (28) verknüpft ist; genannte zweite elektrische Schaltungen (36) sind auf einer weiteren Karte (23) für gedruckte elektrische Schaltungen gelegen; genannte weitere Karte (23) ist elektrisch und mechanisch sowohl mit der genannten Karte (15) als auch mit den einzelnen Halterungen (28) jeder einzelnen der genannten ersten elektronischen Schaltungen verbunden; die entstehende Struktur der genannten Einrichtung (10) entspricht dem Volumen einer prismatischen Form, auf drei Seiten von einem Schutzbehälter (14) zu schließen, während ihre vierte Seite aus der genannten Karte (15) besteht und genannte Armaturen (17, 19) der genannten kapazitiven Sensoren (41) enthält.

6. Sensorstangeneinrichtung nach einem der Ansprüche 1 bis 5; genannte Einrichtung enthält Einheiten zur Regulierung und Eichung (27, 32, 35) der Sensibilität der Sensoren (41) gegenüber verschiedenen Materialien und gegenüber der Entfernung der abzunehmenden Objekte, genannte Einheiten zur Regulierung erlauben eine gleichzeitige Regulierung (27, 35) der Sensibilität aller genannten Sensoren sowie eine separate Regulierung (32) für jeden von ihnen.

7. Sensorstangeneinrichtung nach einem der Ansprüche 1 bis 6, wo genannte elektrische Signale, produziert von genannten ersten elektronischen Schaltungen (31, 33, 34), digitaler Art sind, eine logische Stufe der genannten digitalen Signale ist verknüpft mit der Anwesenheit von Objekten in der Nähe der genannten Sensoren (41), die andere der genannten logischen Stufen ist verknüpft mit der Abwesenheit von Objekten in der Nähe der genannten Sensoren, genannte digitale Signale werden in Serienform von genannten zweiten elektrischen Schaltungen (36) an Ausarbeitungs- und Kontrolleinheiten übermittelt, die an genannter Einrichtung (10) außen liegen.

8. Sensorstangeneinrichtung nach einem der Ansprüche 2 bis 7, wo genannte gemeinsame Armatur (19) mit einem Wechselstromgenerator (20) verbunden ist; das andere Terminal des genannten Generators (20) ist verbunden mit genanntem Metallstreifen (18) zum Schutz und zur Stablisierung; die genannten ersten elektronischen Schaltungen enthalten Verstärkerschaltungen (31) der kapazitiv gesammelten Signale auf den genannten einzelnen Aramaturen (17); Schaltungen (33) erzeugen elektrische Signale, deren Mittelwert proporzional ist zur Amplitude der Signale, die von genannten Verstärkerschaltungen produziert werden (31); Schaltungen (34) vergleichen genannte elektrische Signale, produziert von genannten Erzeugerschaltungen (33) mit einem elektrischen Bezugssignal gesetzt durch Eichungseinheiten (35).

9. Sensorstangeneinrichtung nach einem der Ansprüche 3 bis 7, wo genannte gemeinsame Armatur (19') mit einem Wechselstromgenerator (20) verbunden ist, das andere Terminal des genannten Generators ist verbunden mit genanntem Metallstreifen (18') zum Schutz und zur Stabilisierung; genannte angrenzende Armaturen (17') sind verbunden mit elektrischen Schaltungen die Verstärker (31') enthalten, deren Zunahme mittels Regulierungselementen (32') einstellbar ist; Meßinstrumente (45) die zwischen der Ausgangskelmme der genannten Verstärker (31') und den genannten Elementen zum Schutz und zur Stabilisierung (18') mit dem Ziel verbunden sind, ein Maß der Distanz zwischen den Objekten und den genannten Sensoren (41) zu erhalten.

10. Sensormeßgerät nach einem der vorgehenden Ansprüche, genannte Einrichtung enthält Leuchtanzeiger (38) verknüpft mit jedem der genannten kapazitiven Sensoren (41); genannte Anzeiger (38) sind so kontrolliert, daß sie angeschaltet sind wenn die elektrischen Signale, die von genannten ersten elektrischen Schaltungen (31, 33, 34) produziert werden, den logischen Stand erreichen, der der Anwesenheit von Objekten zugeordnet wird, die sich in derNähe jedes der genannten kapazitiven Sensoren (41) auf einer Distanz befinden, die zweckmäßig ist abzunehmen .

11. Sensorstangeneinrichtung nach einem der Ansprüche 1 bis 10, genannte Einrichtung enthält Mittel (37) für eine schnelle Verbindung mit wenigstens einem anderen der genannten Einrichtungen, um so einen neuen einzigen strukturellen Komplex zu bilden mit einer adäquaten Länge zu den Dimensionen der Objekte, deren Form und deren Anwesenheit abgenommen werden müssen.

12. Gebrauch des Sensorstangeneinrichtung wie in einem der Ansprüche von 7 bis 11 auf Schleifmaschinen für Holzprodukte und/oder auf Lackiermaschinen für Holz-, Plastik-, oder Lederprodukte; die digitalen Signale, produziert von genannter Einrichtung, werden an Ausarbeitungs- und Kontrolleinheiten übermittelt, zusammen mit weiteren Signalen, die verknüpft sind mit der Passiergeschwindigkeit der genannten Produkte in der Nähe von genannten Sensoren, so daß die Oberfläche jedes genannten Produktes kalkuliert werden kann.

## Revendications

1. Capteur capacitif électronique en forme de barre pour relever la forme ainsi que de la proximité en général d'objets, du modèle prévu sur une carte (15,15') pour circuits électriques imprimés ayant des superficies métalliques sur un substrat diélectrique et comprenant des capteurs (41) capacitifs disposés de facon contigüe en une seule et unique structure et ayant une armature commune (19,19'), premiers circuits électroniques (31,33,34) aptes à émettre des signaux électriques associés à la présence d'objets placés devant lesdits capteurs (41) à proximité de ladite structure, seconds circuits électroniques (36) aptes à transmettre lesdits signaux électriques à des unités d'élaboration et de contrôle externes audit dispositif, **caractérisé en ce que** ladite armature en commun (19,19') consiste en une unique bande continue obtenue à partir d'une couche métallique de ladite carte (15,15') placée latéralement et longitudinalement sur le face (42, 42') de ladite carte tournée vers l'extérieur dudit dispositif (10) et les autres armatures (17,17') desdits capteurs (41) consistent en des portions de couche métallique contigüe à ladite carte (15,15'), ledit dispositif (10) comprenant une ultérieure bande de couche métallique (18,18') placée entre ladite armature en commun (19,19') et lesdites armatures contigües (17,17') servant d'écran et de stabilisation contre les éventuelles capacités parasites naissantes entre ladite armature commune (19,19') et lesdites armatures contigües (17,17'), ladite ultérieure bande métallique (18,18') étant conformée de facon à contourner au moins deux côtes de ladite armature commune (19,19').

2. Capteur capacitif électronique en forme de barre selon la revendication 1, dans lequel lesdites armatures contigües (17)sont placées sur la face (43) de ladite carte (15) tournée vers l'intérieur dudit dispositif et sur le côté opposé à celui où est installée ladite unique bande continue (19).

3. Capteur capacitif électronique en forme de barre selon la revendication 1, dans lequel lesdites armatures contigües (17') sont placées sur la même face (42') mais sur le côté opposé à celui où est installée ladite unique bande continue (19').

4. Capteur capacitif électronique en forme de barre selon une des revendications de 1 à 3, dans lequel ladite ultérieure bande métallique (18,18') consiste substantiellement en une portion continue de couche métallique disposée sur la face (43,43') de ladite carte (15,15') tournée vers l'intérieur dudit dispositif sur le même côté où est installée ladite armature commune (19,19') ladite bande métallique (18,18') étant reliée par des trous métallisés (21) à une fine bande métallique continue (22,22') disposée sur le côté opposé (42,42') entre ladite armature continue (19,19') et lesdites armatures contigües (17, 17').

5. Capteur capacitif électronique en forme de barre selon une des revendications de 1 à 4, ledit dispositif comprenant un desdits premiers circuits électroniques (31,33,34) pour chacun desdits capteurs (41), chacun desdits premiers circuits électroniques (31,33,34) reposant sur un support propre (28), distinct les uns des autres, électriquement et mécaniquement relié à ladite carte (15,15') proche du capteur capacitif auquel ledit support (28) est associé. lesdits seconds circuits électroniques (36) étant situés sur une carte ultérieure (23) pour des circuits électriques imprimés, ladite carte ultérieure (23) étant électriquement et mécaniquement reliée soit à ladite carte (15) soit aux circuits individuels (28) de chacun desdits premiers circuits électroniques, la structure résultant dudit dispositif (10) correspondant à un volume de forme prismatique qui peut être fermé sur trois côtés par un receptacle protecteur (14) alors que son quatrième côté consiste en ladite carte (15) contenant lesdites armatures (17,19) desdits capteurs capacitifs (41).

6. Capteur capacitif électronique en forme de barre selon une des revendications de 1 à 5, ledit dispositif comprenant une unité de réglage et de tarage (27,32,35) de la sensibilité des capteurs (41) aux divers matériaux et à la distance par rapport aux objets à identifier, lesdites unités de réglage permettant un réglage simultané (27,35) de la sensibilité desdits capteurs ainsi que leur réglage individuel (32).

7. Capteur capacitif électronique en forme de barre selon une des revendications de 1 à 6 dont lesdits signaux électriques émis par les premiers circuits électroniques (31,33,34) sont digitaux, un des niveaux logiques desdits signaux digitaux étant associés à la présence d'objets à proximité desdits capteurs (41), l'autre niveau logique étant associé à l'absence d'objets à proximité desdits capteurs, lesdits signaux digitaux étant transmis de facon sérielle par lesdits seconds circuits électroniques (36) à des unités de traitement et de contrôle situées à l'extérieur dudit dispositif (10').

8. Capteur capacitif électronique en forme de barre selon une des revendications de 2 à 7 dans laquelle ladite armature commune (19) est reliée à un générateur (20) d'un signal électrique alterné, l'autre terminal dudit génerateur (20) étant relié à ladite bande métallique (18) servant d'écran et de stabilisation, lesdits premiers circuits électroniques comprenant des circuits d'amplification (31) des signaux électriques rassemblés de facon capacitive sur lesdites armatures individuelles (17), circuits (33) générateurs de signaux électriques dont la valeur moyenne est proportionnelle à l'amplitude des signaux émis par lesdits circuits d'amplification (31), circuits de comparaison (34) desdits signaux électriques émis par lesdits circuits générateurs (33) avec un signal électrique de référence imposé avec une unité de tarage (35).

9. Capteur capacitif électronique en forme de barre selon une des revendications de 3 à 7 dans laquelle ladite armature commune (19') est reliée à un générateur (20) de signal électrique alterné, l'autre terminal dudit générateur étant relié à ladite bande métallique (18') servant d'écran et de stabilisation, lesdites armatures contigües (17') étant reliées à des circuits électroniques comprenant des amplificateurs (31'), dont le gain est réglable avec des éléments de réglage (32'), des instruments de mesure (45) étant reliés entre la borne de sortie desdits amplificateurs (31') et dit élément (18') servant d'écran et de stabilisation, dans le but de déterminer une évaluation de la distance des objets de lesdits capteurs (41) .

10. Capteur capacitif électronique en forme de barre selon une des revendications précédentes, ledit dispositif comprenant des indicateurs lumineux (38) associés à chacun desdits capteurs capacitifs (41), lesdits indicateurs (38) étant commandés de telle facon à ce qu'ils soient allumés quand les signaux électriques émis par lesdits premiers circuits électroniques (31.33,34) atteignent un niveau logique associé à la présence d'objets à proximité de chacun desdits capteurs capacitifs (41) à une distance convenable pour être relevé.

11. Capteur capacitif électronique en forme de barre selon une des revendications de 1 à 10, ledit dispositif comprenant des moyens (37) pour une liaison rapide avec au moins un autre desdits dispositifs de telle facon à constituer une seule nouvelle structure dont la longueur serait adéquate aux dimensions des objets dont la forme et la présence doivent être releves.

12. Usage du capteur capacitif électronique en forme de barre selon une des revendications de 7 à 11 sur des ponceuses à bois et/ou sur des machines à vernir pour bois ou plastique voire peaux, les signaux digitaux émis dudit dispositif étant tansmis à une unité d'élaboration et de contrôle en même temps que des signaux ultérieurs associés à la vitesse de passage desdits produits à proximité desdits capteurs, de facon à calculer la superficie de chacun desdits produits.
